# DEMANDE DE BREVET EUROPEEN

(11) **EP 1 460 852 A1**
(43) Date de publication de la demande: **22.09.2004**
(21) Numéro de dépôt: 03290736.2
(22) Date de dépôt: 21.03.2003
(51) Int. Cl.: H04N 7/173, H04N 5/445

(54) **Procédé et dispositif de diffusion et de chargement d'une information dans un système de communication du type télévision numérique**

(71) Demandeur: THOMSON Licensing S.A., 92100 Boulogne-Billancourt (FR)
(72) Inventeur: Bettan, Hubert, 92310 Sevres (FR); Chauvier, Laurent, 75007 Paris (FR)
(74) Mandataire: Kohrs, Martin

(57) **Abrégé**

Une information est diffusée depuis une source de diffusion en vue d'être acquise et stockée dans au moins un terminal.

Le procédé de chargement comprend les étapes suivantes :
- programmation de l'activation automatique d'un module de chargement, ladite programmation de l'activation étant prévue pour désynchroniser la phase d'acquisition de l'information de la phase d'utilisation de cette information,
- en réponse à l'activation automatique du module de chargement ainsi programmée, vérification d'un ou plusieurs paramètres de chargement prédéterminés, et
- en cas de vérification positive pour chacun des paramètres de chargement, acquisition de l'information courante diffusée depuis la source de diffusion et stockage dans le terminal.

## Description

La présente invention se rapporte au chargement d'une information dans un système de communication, notamment du type télévision numérique, dans lequel au moins une information est diffusée depuis une source de diffusion en vue d'être acquise et stockée dans au moins un terminal. Elle se rapporte aussi à la diffusion d'une telle information depuis une source de diffusion à destination d'au moins un terminal.

La présente invention trouve une application générale dans le traitement de données numériques échangées entre un diffuseur et au moins un terminal et plus particulièrement dans le domaine de la transmission de télévision numérique et d'informations de service liées.

On sait que les systèmes de télévision numérique transmettent, via des systèmes de diffusion, des informations numériques contenant différentes chaînes (ou programmes) de télévision à destination de terminaux. Généralement, les canaux numériques transportant les informations des chaînes de télévision contiennent des flux de données codés dans un émetteur. Ces informations ainsi transmises sont décodées dans un terminal équipé d'un dispositif récepteur /décodeur numérique.

Pour permettre l'interactivité entre le terminal et le diffuseur, une liaison retour peut être fournie soit via le même support que celui permettant la délivrance des chaînes de télévision soit via un support différent tel qu'une liaison téléphonique. D'autres types de données, tels que l'audio numérique, des logiciels, et des données interactives peuvent ou sont aussi transmis.

Le terme «système de télévision numérique» inclut ici par exemple les systèmes satellite, câble, terrestre, et analogues.

Le terme «dispositif récepteur/décodeur» inclut ici un dispositif récepteur pour recevoir soit des signaux codés soit des signaux non codés, par exemple des signaux audio/vidéo, de préférence au format MPEG. Ces signaux peuvent être transmis par différents moyens. Le dispositif récepteur/décodeur peut être un dispositif appelé aussi "set-top-box" en anglo-saxon connecté ou intégré à un poste de télévision. Le dispositif récepteur/décodeur peut être fixe ou portable.

Le terme «MPEG» fait référence ici au standard de transmission de données développé par le groupe de travail « Motion Pictures Expert Group » de l'International Standard Organisation » et en particulier mais non exclusivement le standard MPEG-2 développé pour les applications de télévision numérique et le standard MPEG-4 ainsi que les autres standards MPEG compatibles. Dans la présente invention, le terme MPEG inclut toutes les variantes, modifications, et développements de formats MPEG applicables à la transmission de données numériques incluant le standard DVB (Digital Vidéo Broadcast).

Les systèmes de diffusion quant à eux s'appuient sur des normes définies par le consortium DVB tel que le DVB-T (Digital Vidéo Broadcast-Terrestre). Le terme DVB se réfère de préférence aux standards DVB développés par le projet DVB de l'ETSI (European Telecommunications Standards Institute). Dans la présente invention, le terme DVB inclut toutes les variantes, modifications, et développements des formats applicables au champ de la transmission de données numériques. Ces systèmes sont définis comme des blocs fonctionnels d'équipements effectuant l'adaptation des signaux audiovisuels à partir du flux d'entrée MPEG-2, aux caractéristiques des dispositifs des utilisateurs.

On entend ici par système de communication tout système d'échange d'informations entre une source de diffusion et au moins un terminal. Ces informations fournissent des services interactifs à l'utilisateur via l'utilisation de son terminal. Les informations se caractérisent dans le système de communication selon deux types d'informations. Le premier type d'informations peut contenir de l'audio/ de la vidéo/ de la donnée, l'information de ce premier type étant transmise au fil de l'eau. Le deuxième type d'informations comprend des données émises de façon cyclique afin d'en donner toujours accès aux terminaux de façon asynchrone, à l'image d'un disque virtuel.

Par exemple, les informations émises de façon cyclique peuvent comprendre des données privées, des fichiers de configuration, des pages ou services écrits en code intermédiaire interprétable par le terminal, des jeux vidéo, des sommaires de services offerts à l'utilisateur, des calendriers, des guides de programmes, et analogues.

D'une manière générale, un terminal de télévision numérique utilise des applications et des données résidentes pour fonctionner. En pratique, ces données résidentes sont intégrées au terminal chez le fabricant ou téléchargées par le flux de diffusion. Les autres données sont diffusées et acquises par le terminal au moment où il en a besoin.

Par conséquent, les performances de l'interactivité sont relativement médiocres puisqu'il faut prendre le temps d'acquérir les données avant de s'en servir. De plus, la diffusion des données est gourmande en bande passante car le cycle de diffusion doit être relativement élevé pour obtenir des temps de réponse à la limite de l'acceptable. Enfin, l'acquisition des données pour leur usage au sein d'un service interactif mobilise au même moment le dispositif d'acquisition entraînant des limitations techniques et fonctionnelles, par exemple impossibilité de visualiser ou consulter les données relatives au guide de programmes tout en conservant la vidéo d'une chaîne.

La présente invention remédie à ces inconvénients.

Elle vise notamment un système de communication permettant au terminal de disposer immédiatement de données sélectionnées et diffusées par le diffuseur, sans gêner l'utilisateur du terminal dans l'utilisation de son terminal, et d'optimiser la bande passante.

Ainsi, la présente invention porte sur un procédé de chargement d'une information dans un système de communication dans lequel une information est diffusée depuis une source de diffusion en vue d'être acquise et stockée dans au moins un terminal, le procédé de chargement étant mis en oeuvre au sein du terminal.

Selon une définition générale de l'invention, le procédé comprend les étapes suivantes :
- programmation de l'activation automatique d'un module de chargement, ladite programmation de l'activation étant prévue pour désynchroniser la phase d'acquisition de l'information de la phase d'utilisation de cette information,
- en réponse à l'activation automatique du module de chargement ainsi programmée, vérification d'un ou plusieurs paramètres de chargement prédéterminés, et
- en cas de vérification positive pour chacun des paramètres de chargement, acquisition de l'information courante diffusée depuis la source de diffusion et stockage dans le terminal.

Ainsi, le procédé selon l'invention permet de désynchroniser la phase d'acquisition d'une information de la phase d'utilisation de cette information par le terminal et de stocker ladite information dans le terminal après acquisition. Ainsi, le terminal dispose immédiatement de données sélectionnées et diffusées par le diffuseur, sans gêner l'utilisateur du terminal dans l'utilisation de son terminal. La bande passante est également optimisée.

Selon une réalisation, la programmation de l'activation est pilotée par la source de diffusion ou établie au préalable avant l'installation du terminal. Une telle programmation permet ainsi au diffuseur de contrôler à distance son parc de terminaux.

En pratique, la programmation de l'activation comprend la définition d'un événement déclencheur à la suite duquel le terminal opère automatiquement l'activation du module de chargement.

Selon une réalisation, l'événement est du type contextuel.

Selon une autre réalisation, l'événement est du type alarme horaire, définissant le moment où le terminal opère automatiquement l'activation du module de chargement.

Par exemple, l'alarme horaire comprend au moins une date théorique d'activation.

Selon une réalisation, la date théorique d'activation est fonction d'au moins une donnée contenue dans le flux de données diffusé depuis la source de diffusion.

Selon une autre réalisation, la programmation de l'activation comprend en outre la définition d'une alarme horaire ultérieure en cas d'échec de chargement et/ou d'interruption du chargement et/ou en cas de vérification négative d'au moins un paramètre de chargement.

Un telle programmation confère des avantages notamment en terme de vitesse de propagation des mises à jour sur le parc de terminaux et de disponibilité des terminaux pour les utilisateurs.

En pratique, l'alarme horaire ultérieure comprend une date ultérieure définie en fonction de la date d'échec de chargement et d'un délai prédéterminé.

Selon encore une autre réalisation, l'alarme horaire ultérieure est répétée jusqu'au chargement de l'information.

Par exemple, la date et/ou le délai de l'alarme horaire ultérieure sont contenus dans le flux de données diffusé depuis la source de diffusion.

Selon encore une autre réalisation, l'étape d'acquisition et de stockage de l'information comprend en outre la programmation de la prochaine activation, après acquisition de l'information courante, en fonction d'une périodicité qui peut être contenue dans le flux de données diffusé depuis la source de diffusion.

En pratique, la mise en oeuvre effective de l'acquisition de l'information requière la vérification d'au moins certains paramètres de chargement.

Selon une réalisation, l'un des paramètres de chargement à vérifier est relatif à une autorisation de chargement.

En pratique, l'autorisation de chargement se vérifie en fonction d'un indicateur diffusé dans le flux de données, la vérification étant positive lorsque l'indicateur correspond à une autorisation de chargement de l'information courante diffusée depuis la source de diffusion.

Selon encore une autre réalisation, l'un des paramètres de chargement à vérifier est relatif à la comparaison entre l'information courante diffusée depuis la source de diffusion et l'information précédemment acquise et stockée, la vérification étant positive notamment lorsque l'identifiant de l'information contenue dans le terminal récepteur est différent de l'identifiant de l'information courante diffusée.

Selon encore une autre réalisation, l'un des paramètres de chargement à vérifier est relatif à la comparaison entre l'information contenue dans le terminal et un seuil critique correspondant à une information périmée, la vérification étant positive notamment lorsque l'identifiant de l'information contenue dans le terminal est strictement inférieur au seuil critique, ou inférieur ou égal audit seuil critique.

Par exemple, le seuil critique est contenu dans le flux de données diffusé depuis la source de diffusion.

Selon encore une autre réalisation, l'un des paramètres de chargement à vérifier est relatif aux ressources de traitement et/ou de mémorisation du terminal, la vérification étant positive lorsque les ressources de traitement et/ou de mémorisation du terminal sont disponibles pour le chargement.

La présente invention a également pour objet un procédé de diffusion d'une information dans un système de communication dans lequel une information est diffusée depuis une source de diffusion à destination d'au moins un terminal pour acquisition, ledit procédé de diffusion étant mis en oeuvre au sein de la source de diffusion.

Selon un autre aspect de l'invention, le procédé de diffusion comprend les étapes suivantes :
- diffuser cycliquement l'information à acquérir selon un premier flux de données, et
- diffuser cycliquement des données de signalisations selon un second flux de données, parallèle au premier flux de données, les données de signalisation comprenant des données destinées à programmer l'activation automatique du terminal pour désynchroniser la phase d'acquisition de l'information dans le terminal de la phase d'utilisation dans ledit terminal.

Selon une réalisation, les données de signalisation ainsi diffusées comprennent un identifiant courant pour l'information courante diffusée depuis la source de diffusion.

Selon encore une autre réalisation, les données de signalisation ainsi diffusées comprennent un indicateur correspondant à l'autorisation du chargement.

Par exemple, les données de signalisation comprennent un indicateur correspondant à un seuil critique, au moins une date théorique d'activation, une date et/ou un délai d'alarme horaire ultérieure et/ou une périodicité de chaque activation.

La présente invention a également pour objet un dispositif de chargement d'une information dans un système de communication dans lequel une information est diffusée depuis une source de diffusion en vue d'être acquise et stockée dans au moins un terminal.

Selon un autre aspect de l'invention, le dispositif de chargement comprend :
- un module de chargement apte à fonctionner automatiquement en fonction d'un programme d'activation choisi pour désynchroniser la phase d'acquisition de l'information de la phase d'utilisation de cette information, et
- des moyens de traitement aptes, en réponse à l'activation du module de chargement ainsi programmée, à vérifier un ou plusieurs paramètres de chargement prédéterminés, et en cas de vérification positive pour chacun des paramètres de chargement, à acquérir l'information courante diffusée depuis la source de diffusion et à la stocker dans le terminal.

Selon une réalisation, le module de chargement est apte à exécuter un programme d'activation comprenant un événement déclencheur à la suite duquel le terminal opère automatiquement l'activation du module de chargement.

Par exemple, l'événement est du type contextuel ou du type alarme horaire, définissant le moment où le terminal opère automatiquement l'activation du module de chargement.

Selon une réalisation, l'alarme horaire comprend au moins une date théorique d'activation, qui peut être fonction d'au moins une donnée contenue dans le flux de données diffusé depuis la source de diffusion.

Selon une autre réalisation, la programmation de l'activation comprend en outre la définition d'une alarme horaire ultérieure en cas d'échec de chargement et/ou d'interruption du chargement et/ou en cas de vérification négative d'au moins un paramètre de chargement.

En pratique, l'alarme horaire ultérieure comprend une date ultérieure définie en fonction de la date d'échec de chargement et d'un délai prédéterminé.

Par exemple, l'alarme horaire ultérieure est répétée jusqu'au chargement de l'information, la date et/ou le délai de l'alarme horaire ultérieure pouvant être contenus dans le flux de données diffusé depuis la source de diffusion.

Selon encore une autre réalisation, les moyens de traitement sont aptes à exécuter en outre la programmation de la prochaine activation, après acquisition de l'information courante.

Selon encore une autre réalisation, les moyens de traitement du dispositif de chargement sont agencés pour vérifier au moins un paramètre de chargement relatif à une autorisation de chargement.

En pratique, l'autorisation de chargement se vérifie en fonction d'un indicateur diffusé dans le flux de données, la vérification étant positive lorsque l'indicateur correspond à une autorisation de chargement de l'information courante diffusée depuis la source de diffusion.

Selon une réalisation, les moyens de traitement sont agencés pour vérifier un paramètre de chargement relatif à la comparaison entre l'information courante diffusée depuis la source de diffusion et l'information précédemment acquise et stockée, la vérification étant positive notamment lorsque l'identifiant de l'information contenue dans le terminal récepteur est différent de l'identifiant de l'information courante diffusée.

Selon une autre réalisation, les moyens de traitement sont agencés pour vérifier un paramètre de chargement relatif à la comparaison entre l'information contenue dans le terminal et un seuil critique correspondant à une information périmée, la vérification étant positive notamment lorsque l'identifiant de l'information contenue dans le terminal est strictement inférieur au seuil critique, ou inférieur ou égal audit seuil critique.

Par exemple, le seuil critique est contenu dans le flux de données diffusé depuis la source de diffusion.

Selon encore une autre réalisation, les moyens de traitement sont agencés pour vérifier un paramètre de chargement relatif aux ressources de traitement et/ou de mémorisation du terminal, la vérification étant positive lorsque les ressources de traitement et/ou de mémorisation du terminal sont disponibles pour le chargement.

La présente invention a également pour objet un dispositif de diffusion d'une information dans un système de communication dans lequel une information est diffusée depuis une source de diffusion à destination d'au moins un terminal pour acquisition.

Selon un autre aspect de l'invention, le dispositif de diffusion comprend :
- des moyens pour diffuser cycliquement l'information à acquérir selon un premier flux de données, et
- des moyens pour diffuser cycliquement des données de signalisation selon un second flux de données, parallèle au premier flux de données, les données de signalisation comprenant des données destinées à programmer l'activation automatique du terminal pour désynchroniser la phase d'acquisition de l'information dans le terminal de la phase d'utilisation dans ledit terminal.

Selon une autre caractéristique, des moyens sont prévus pour insérer dans les données de signalisation un identifiant courant pour l'information courante diffusée depuis la source de diffusion.

De même, des moyens sont prévus pour insérer dans les données de signalisation un indicateur correspondant à l'autorisation du chargement.

En outre, des moyens sont prévus pour insérer dans les données de signalisation un indicateur correspondant à un seuil critique, une ou des dates théoriques d'activation, une date et/ou un délai correspondant à une alarme horaire ultérieure, et/ou une périodicité pour la prochaine activation.

D'autres caractéristiques et avantages de l'invention apparaîtront à la lumière de la description détaillée ci-après et des dessins dans lesquels :
- la figure 1 représente schématiquement un système de télévision numérique selon l'art antérieur ;
- la figure 2 représente schématiquement la structure d'un terminal selon l'art antérieur ;
- la figure 3 représente schématiquement l'architecture globale d'un dispositif récepteur/décodeur selon l'art antérieur ;
- la figure 4 représente schématiquement la fabrication du flux de données au niveau de la source de diffusion selon l'art antérieur ;
- la figure 5 représente schématiquement la diffusion cyclique des flux de données dans un système de communication interactif de l'art antérieur ;
- la figure 6 est un organigramme illustrant les étapes principales du procédé de chargement selon l'invention ;
- la figure 7 est un organigramme illustrant de manière détaillée les étapes du procédé de chargement selon l'invention ;
- la figure 8 représente schématiquement l'architecture globale du dispositif récepteur/décodeur apte à mettre en oeuvre le procédé de chargement selon l'invention ;
- la figure 9 est un organigramme illustrant la programmation de l'activation du module de chargement selon l'invention ;
- la figure 10 est un organigramme illustrant les étapes du chargement d'une information selon l'invention ;
- la figure 11 est un organigramme illustrant le chargement d'une information dans le cas d'un dispositif récepteur/décodeur stockant une information périmée (identifiant inférieur au seuil critique) selon l'invention ;
- la figure 12 est un organigramme illustrant la programmation du chargement en cas d'échec du chargement selon l'invention ;
- la figure 13 est un organigramme illustrant la programmation du chargement en cas d'interruption du chargement selon l'invention ; et
- la figure 14 illustre la mise en oeuvre du chargement de l'image de l'interactivité du côté de la source de diffusion selon l'invention.

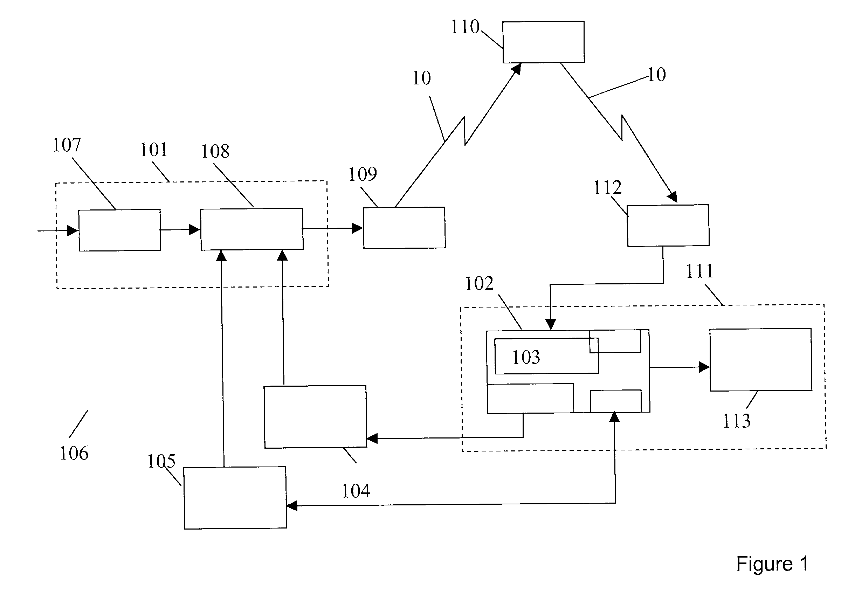

En référence à la **figure 1**, un système de communication, de type télévision numérique 106, comprend un centre de diffusion 101 et au moins un terminal 111 appartenant à un parc de terminaux.

Le terminal 111 comprend un dispositif récepteur/décodeur 102 possédant une architecture logicielle et/ou matérielle 103, et un équipement de visualisation 113.

Le système de communication 106 comprend en outre, d'une part un dispositif interactif 104 jouant le rôle de voie de retour, et d'autre part un système d'accès conditionnel 105.

D'une manière générale, le système de télévision numérique 106 utilise un système de compression de type MPEG-2 *(Motion Picture Expert Group)* pour transmettre des signaux numériques compressés.

Au niveau du centre de diffusion 101, un organe compresseur 107 reçoit un flux numérique, typiquement un flux de signaux audio et/ou vidéo, et transforme ce flux en signaux numériques au format MPEG-2.

L'organe compresseur 107 est connecté par une liaison à un organe formant multiplexeur et embrouilleur 108 *(scrambler* selon la terminologie anglaise).

L'organe formant multiplexeur et embrouilleur 108 reçoit une pluralité de sources transformées et/ou des données (application et données d'application), rassemble ces sources et/ou données en un unique canal, et transmet les flux numériques compressés à un émetteur (modulateur/parabole d'émission) 109 du centre de diffusion 101.

L'émetteur 109 transmet les flux de données 10 via une première liaison (satellite, terrestre, câble, combinaison de deux ou plusieurs moyens de transmission) vers une borne 110 qui va les retransmettre via une seconde liaison vers des récepteurs 112, par exemple, au travers de paraboles ou antennes.

Les flux de données 10 sont transmis sur une plage de fréquences prédéterminée, appelée bande passante.

Les signaux reçus par les récepteurs (antennes) 112 sont transmis au dispositif récepteur/décodeur 102 du terminal 111 de l'utilisateur sur lequel est connecté un équipement de visualisation 113, tel qu'un poste de télévision.

Le dispositif récepteur/décodeur 102 filtre une portion du flux global de données correspondant au service attendu par l'utilisateur.

Ensuite, le dispositif récepteur/décodeur 102 décode le signal MPEG-2 compressé en un flux de données vidéo ou autre pour l'équipement de visualisation 113.

Le dispositif interactif 104 est connecté à l'organe formant multiplexeur et embrouilleur 108 d'une part, et au dispositif récepteur/décodeur 102 d'autre part. En pratique, le dispositif interactif 104 est localisé partiellement dans le centre de diffusion 101 et partiellement dans le terminal 111. Le dispositif interactif 104 permet à l'utilisateur d'interagir avec un certain nombre d'applications via un canal de retour. Le canal ou voie de retour peut être par exemple un canal de communication de type réseau commuté ou PSTN *(Public Switched Telephone Network)* ou un canal de communication mobile de type GPRS ou UMTS.

Le système d'accès conditionnel 105 est aussi connecté à l'organe formant multiplexeur et embrouilleur 108 et au dispositif récepteur/décodeur 102. Le système d'accès conditionnel 105 est également localisé partiellement dans le centre de diffusion 101 et partiellement dans le dispositif récepteur/décodeur 102. Le système d'accès conditionnel 105 permet à l'utilisateur d'accéder aux transmissions de données de télévision numérique diffusées d'un ou plusieurs fournisseurs.

Le système d'accès conditionnel est articulé autour d'une carte à puce détenue par l'utilisateur. La carte à puce est capable de décrypter les messages en relation aux offres commerciales. La carte à puce communique avec un lecteur de carte à puce (non représenté) équipant le dispositif récepteur/décodeur 102.

En pratique, une partie des programmes transmis par le centre de diffusion 101 sont codés, les conditions et clefs de cryptage appliquées à une transmission étant déterminées par le système de contrôle d'accès.

D'une manière générale, les données codées sont transmises avec un mot de contrôle pour décoder les données.

Le mot de contrôle est lui-même crypté par une clef d'exploitation et transmis sous une forme cryptée.

Les données codées et le mot de contrôle crypté sont reçus par le dispositif récepteur/décodeur 102 ayant accès à la clef d'exploitation enregistrée dans la carte à puce insérée dans le dispositif récepteur/décodeur 102 pour décrypter le mot de contrôle crypté et ensuite décoder les données transmises.

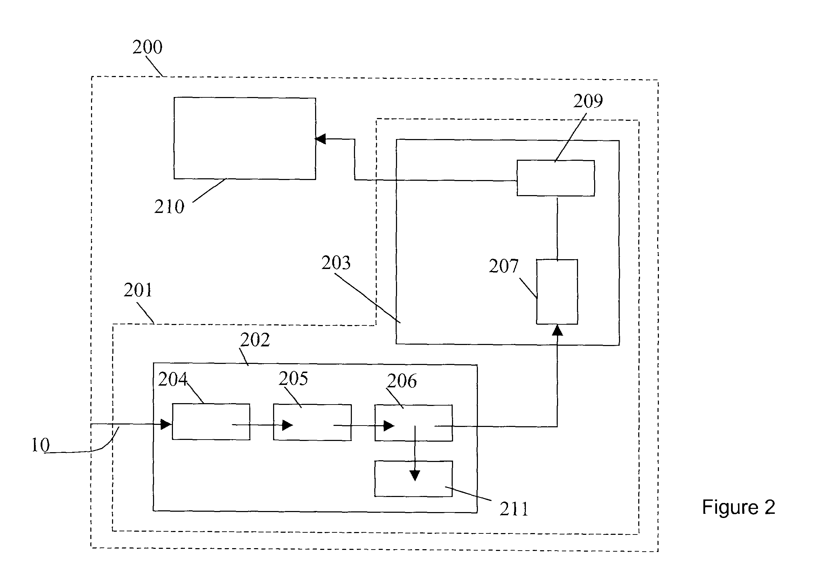

En référence à la **figure 2**, la structure d'un terminal utilisateur 200 comprend un dispositif récepteur/décodeur 201 possédant une partie formant récepteur 202 et une partie formant décodeur 203. Le terminal 200 reçoit le flux de données 10 transmis par la source de diffusion. La partie formant décodeur 203 comprend une mémoire 207 et une unité de traitement 209 communiquant avec un équipement de visualisation 210.

La partie formant récepteur 202 comprend au moins une chaîne de réception formée par un tuner 204, un démodulateur 205 et un démultiplexeur 206. Le démultiplexeur 206 réalise la séparation des différentes informations transmises dans le flux (mot de contrôle crypté, composante embrouillée) afin de pouvoir les désembrouiller ultérieurement.

Selon l'information reçue, le démultiplexeur 206 transmet, d'une part, les informations de signalisation à une unité de traitement de la signalisation 211 et, d'autre part, les données audio/visuelles dans la mémoire tampon 207.

L'information lue dans la mémoire 207 est ensuite lue par l'unité de traitement 209 qui désembrouille le programme, si celui-ci est embrouillé, et si l'utilisateur a les droits d'accès correspondants.

Le résultat du traitement est ensuite acheminé vers l'équipement de visualisation 210.

L'unité de traitement de la signalisation 211 a pour rôle de traiter l'ensemble des informations de signalisation.

Par exemple, les informations de signalisation incluent la signalisation de type PSI *(Program Specific Information),* la signalisation SI (Signalisation Information) présentant un moyen de navigation au sein de l'ensemble des services d'événements, ainsi que les tables conformes à la norme DVB *(Digital Video Broadcasting),* telles que la table SDT (Service Description Table), la table BAT (Bouquet Association Table), la table NIT (Network Information Table), etc.

La mémoire 207 est une mémoire temporaire qui est apte à contenir l'ensemble des informations devant permettre à la partie formant décodeur 203 de reconstituer le signal à visualiser.

En variante, un terminal peut comprendre deux chaînes de réception comportant chacune un tuner, un démodulateur et un démultiplexeur. Un tel dispositif récepteur/décodeur à deux chaînes de réception peut ainsi permettre l'enregistrement d'un premier flux de données sur une première chaîne de réception, et en parallèle la visualisation d'un second flux de données à partir de la seconde chaîne de réception.

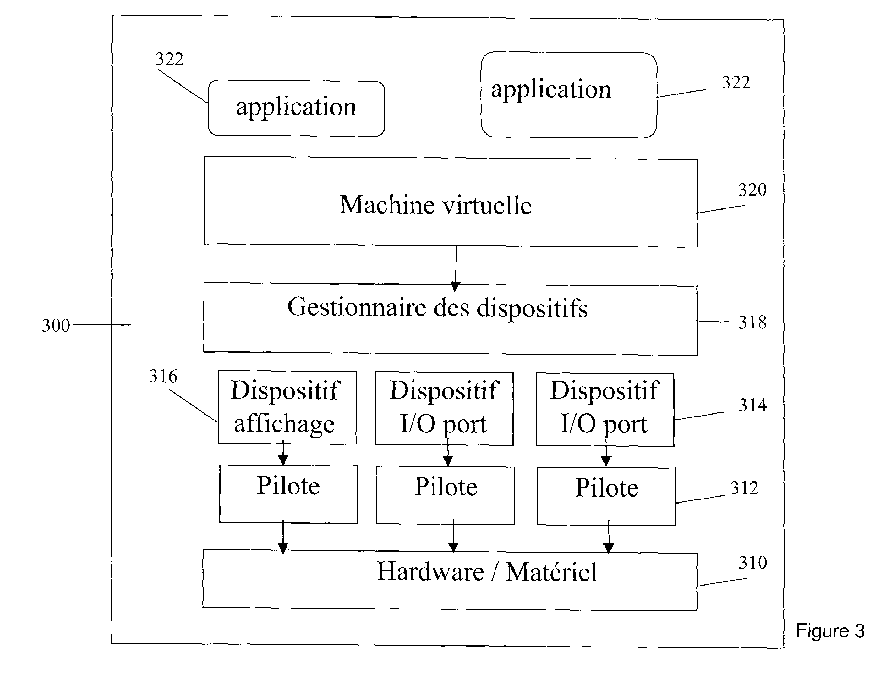

En référence à la **figure 3**, l'architecture globale de la plate-forme 300 contenant le dispositif récépteur/décodeur comprend plusieurs couches.

Une première couche 322 dite "couche application" fournit les fonctionnalités des applications exécutées par la plate-forme sur un dispositif récepteur/décodeur.

Cette couche applicative 322 est sous le contrôle des dispositifs de fournisseurs de services.

Une application 322 peut:
- être résidente ou dynamiquement chargée dans le dispositif récepteur/décodeur ;
- s'exécuter indépendamment ou en conjonction avec le flux audio/vidéo/données d'un ou plusieurs programmes de télévision ; et/ou
- effectuer des requêtes sur des serveurs via une voie de retour et afficher les réponses à l'écran de visualisation.

La plate-forme comprend également une machine virtuelle 320 fournissant un interpréteur de codes intermédiaires, un support de mémorisation et différents répertoires de traitement.

La plate-forme comprend en outre un gestionnaire de dispositifs 318 et les dispositifs correspondants (dispositif d'affichage 316, dispositif d'entrées/sorties 314).

Le gestionnaire de dispositifs 318 est disposé entre les applications interactives 322 et les éléments physiques 316, 314, 312, 310 du dispositif récepteur/décodeur.

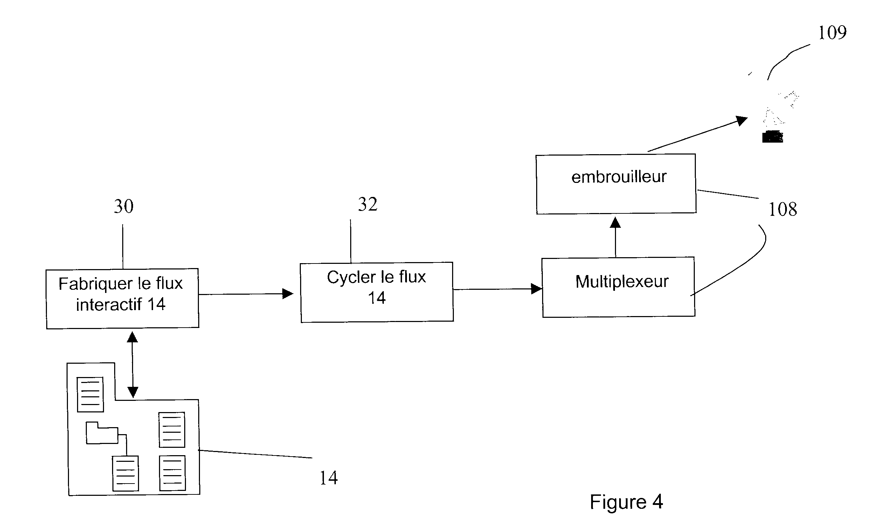

En référence à la **figure 4**, un flux de données interactives 10 (contenant des informations 14 à acquérir au niveau du terminal) est fabriqué au niveau de la source de diffusion.

Un module de fabrication 30 découpe en sections, selon le protocole de transport utilisé, les applications ainsi constituées d'un ensemble structuré de fichiers 14.

Un mécanisme de diffusion 32 assure la diffusion cyclique des volumes applicatifs (contenant les informations 14) ainsi mis en section via l'organe multiplexeur/embrouilleur 108 et l'émetteur 109.

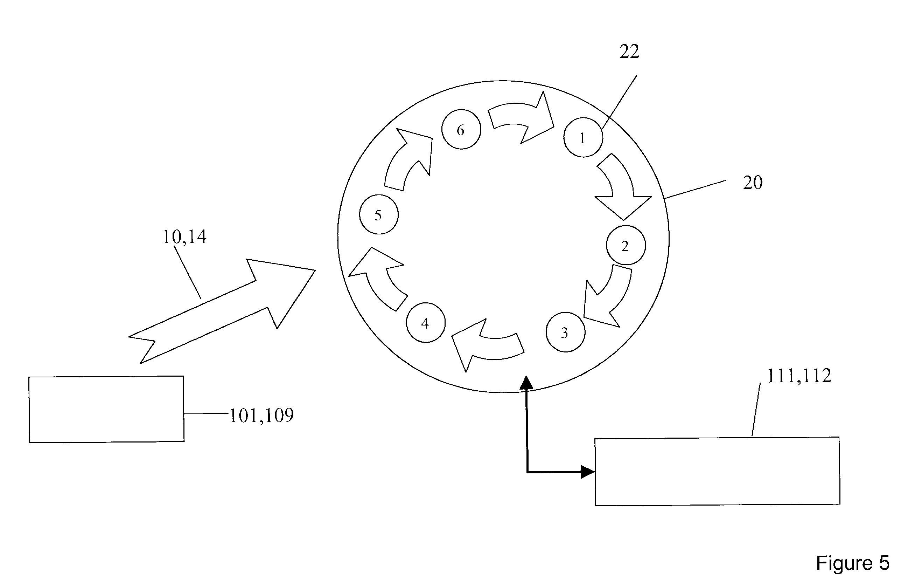

En référence à la **figure 5**, le flux de données interactives 10 contenant l'information 14 diffusé par le centre de diffusion 101, 109 peut être considéré comme un disque virtuel agencé en un carrousel 20 dans lequel les fichiers de données 22 sont transmis et répétés cycliquement pendant une durée prédéterminée à destination des terminaux 111. Les fichiers 22 sont caractérisés par un nom, une taille, etc...

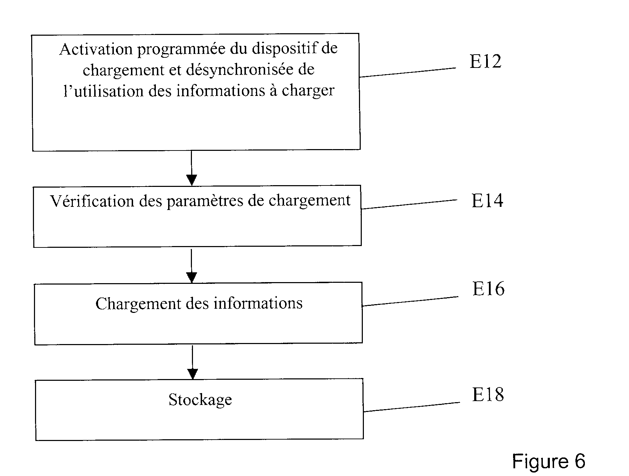

En référence à la **figure 6,** l'organigramme du procédé de chargement selon l'invention comprend les étapes principales suivantes.

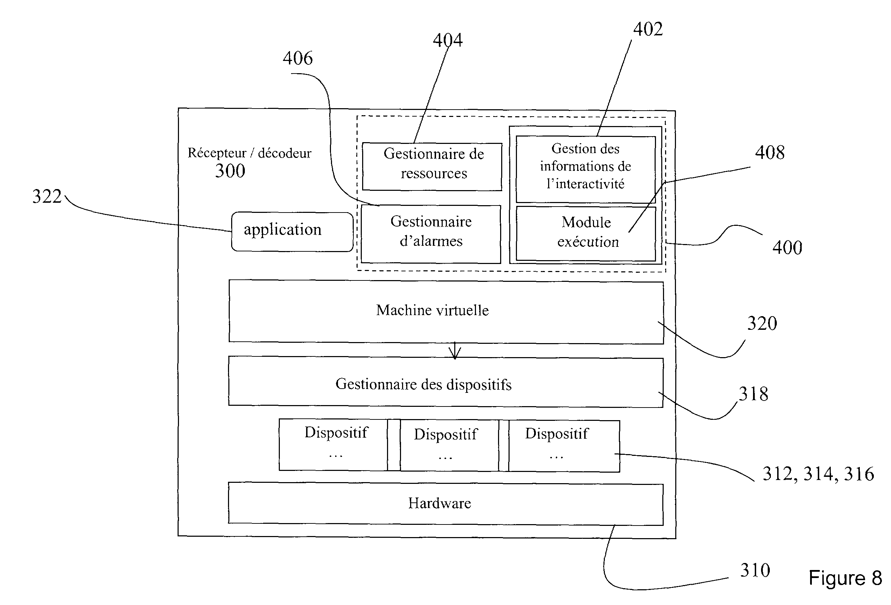

Selon l'étape E12, il est prévu de programmer une activation automatique d'un module de chargement 400 que l'on décrira plus en détail en référence à la **figure 8**.

La programmation de l'activation est établie pour désynchroniser la phase d'acquisition de l'information de la phase d'utilisation de cette information.

En pratique, la programmation de l'activation comprend la définition d'un événement déclencheur à la suite duquel le terminal opère automatiquement l'activation du module de chargement.

L'événement est du type contextuel ou du type alarme horaire, définissant le moment où le terminal opère automatiquement l'activation du module de chargement.

L'événement contextuel peut être mis en oeuvre par un ensemble de conditions à vérifier relatives par exemple, à l'état d'un certain nombre de ressources du terminal. Par exemple, l'utilisateur n'a pas agit durant un certain temps, on considère alors que l'utilisateur n'est pas en cours de visualisation et par conséquent on peut déclencher l'activation du chargement. Dans la suite de la description donnée à titre d'exemple, la programmation de l'activation est articulée autour d'alarmes horaires.

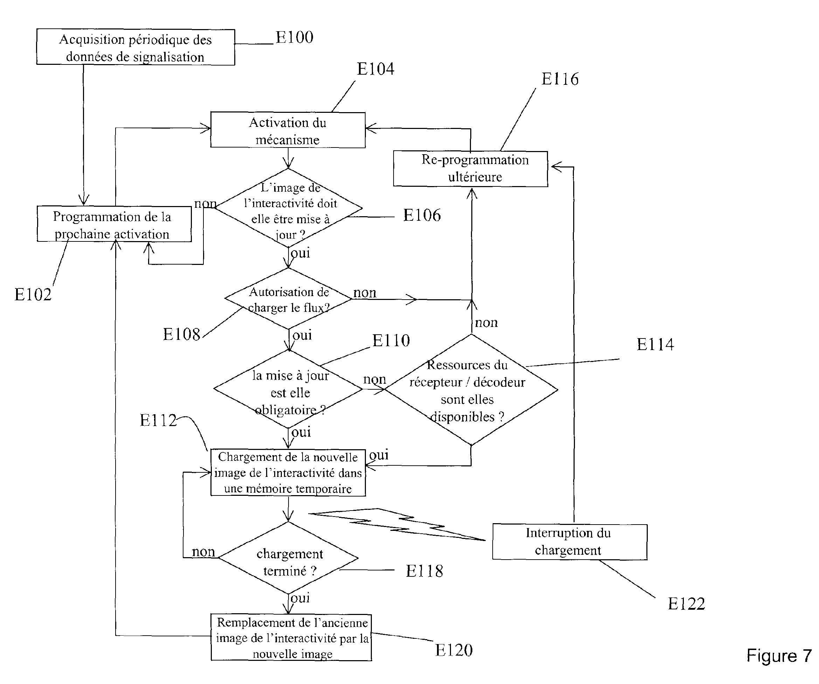

Selon l'étape E14, en réponse à l'activation automatique du module de chargement ainsi programmée, il est prévu de vérifier un ou plusieurs paramètres de chargement prédéterminés conformément aux figures **7, 10** à **13.**

Selon l'étape E16, en cas de vérification positive pour chacun des paramètres de chargement, il est prévu de charger l'information courante diffusée depuis la source de diffusion.

Enfin selon l'étape E18, l'information ainsi acquise est stockée dans le terminal.

La programmation de l'activation peut être gérée à distance par la source de diffusion ou établie au préalable avant l'installation du terminal.

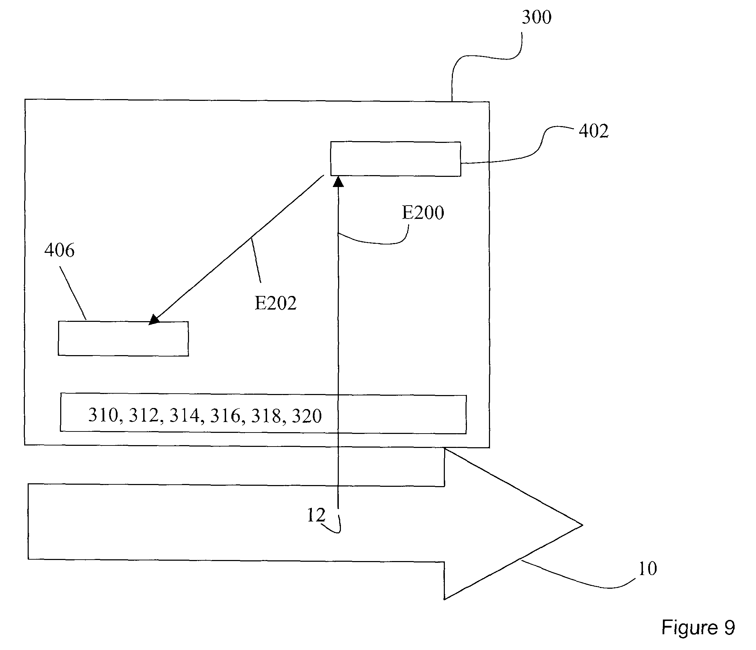

La programmation d'une alarme horaire théorique fournie par le diffuseur est décrite en détail en référence aux **figures 7 et 9.**

En référence à la **figure 7,** l'algorithme détaillé du procédé de chargement selon l'invention comprend les étapes suivantes.

En pratique, l'information 14 à acquérir est désignée par un identifiant unique qui peut correspondre à une version, une date, un contenu, ou une période associée à l'information. Par exemple, dans le cas d'une information 14 du type guide des programmes, l'identifiant du guide de programmes valable pour la semaine allant du 3 au 10 mars est égal à "0310" tandis que celui du lendemain est égal à "0311". Une telle relation d'ordre entre l'identifiant de chaque version permet ainsi d'établir des comparaisons entre les différentes versions du guide de programmes.

Dans l'étape E100, il est prévu d'acquérir périodiquement des données de signalisation dans le flux de diffusion 10 afin de programmer l'alarme horaire théorique dans le terminal.

Dans l'étape E102, il est prévu de programmer la prochaine alarme horaire théorique, après acquisition de l'information en fonction d'une périodicité choisie qui peut être contenue dans le flux de données 12.

Dans l'étape E104, le mécanisme de chargement est activé en réponse à l'alarme horaire valablement programmée et déclenchée.

Après activation du module de chargement, il est prévu de vérifier plusieurs paramètres de chargement. La réalisation des vérifications est articulée notamment sur l'identification de l'information à acquérir 14, appelée ici parfois image de l'interactivité.

Selon l'étape E106, l'un des paramètres de chargement à vérifier est relatif à la comparaison entre l'information courante diffusée depuis la source de diffusion et l'information précédemment acquise et stockée, la vérification étant positive notamment lorsque l'identifiant de l'information contenue dans le terminal récepteur est différent de l'identifiant de l'information courante diffusée.

En d'autres termes, la vérification consiste à répondre à la question "l'information ou image de l'interactivité doit elle être mise à jour ?". En cas d'identifiant différent entre l'information courante et l'information déjà stockée, la réponse à cette question est positive. Cette vérification est mise en oeuvre sur les données de signalisation acquise conformément à la figure à l'étape E100.

En présence d'une vérification négative (identifiants identiques), le procédé passe à l'étape E102 consistant à programmer une prochaine activation selon une périodicité choisie.

Dans le cas d'un test E106 positif (c'est-à-dire l'image de l'interactivité doit être mise à jour), on passe à un autre test (étape E108).

Le test E108 consiste à vérifier si les données de signalisation 12 du flux de diffusion 10 contiennent une autorisation de chargement. Par exemple, l'autorisation de chargement se vérifie en fonction d'un indicateur inséré dans les données de signalisation 14 du flux de données, la vérification étant positive lorsque l'indicateur correspond à une autorisation de chargement de l'information courante diffusée depuis la source de diffusion.

Lorsque le diffuseur souhaite changer de version de l'image de l'interactivité, le diffuseur change le statut de l'indicateur en le plaçant en interdiction de chargement. Après le changement de version, le diffuseur remet le statut de l'indicateur en autorisation de chargement de cette nouvelle version.

En présence d'une interdiction de chargement (test E108 négatif), on passe à l'étape E116 consistant à programmer une nouvelle tentative de chargement à exécuter ultérieurement. Cette programmation consiste à définir une alarme horaire ultérieure comprenant une date ultérieure définie en fonction de la date d'échec de chargement et d'un délai prédéterminé. L'alarme horaire ultérieure est répétée jusqu'au chargement de l'information. Par exemple, la date ultérieure et/ou le délai de l'alarme horaire ultérieure sont contenus dans le flux de données diffusé depuis la source de diffusion.

En présence d'une autorisation de chargement (test E108 positif), on passe à l'étape E110 dans laquelle on vérifie si le chargement est obligatoire.

Comme on le verra plus en détail ci-après, le caractère obligatoire du chargement correspond à une situation dans laquelle l'image de l'interactivité déjà stockée dans le terminal est critique. Pour cela on compare l'information contenue dans le terminal avec un seuil critique correspondant à une information périmée, la vérification étant positive lorsque l'identifiant de l'information contenue dans le terminal est inférieur ou égal au seuil critique (inséré dans les données de signalisation).

Dans le cas où le chargement n'est pas obligatoire (information stockée différente mais non périmée), on vérifie si les ressources du dispositif récepteur/décodeur sont disponibles (autre paramètre de chargement à vérifier). Par exemple, on vérifie que le terminal n'est pas occupé en visualisation ou qu'il existe au moins une chaîne de réception disponible.

En présence d'un chargement non obligatoire et d'un terminal occupé, on procède à une programmation d'une nouvelle tentative de chargement à exécuter ultérieurement.

Dans le cas où le chargement n'est pas obligatoire (information non périmée) et avec un terminal disponible (non occupé en visualisation par exemple), on lance selon l'étape E112 le chargement de l'image de l'interactivité courante.

Le chargement de l'image de l'interactivité est également lancé lorsque la mise à jour est obligatoire (test positif lors de l'étape E110 en présence d'une information stockée périmée, c'est-à-dire avec un identifiant de l'information courante strictement inférieur au seuil critique, ou inférieur ou égal audit seuil critique), même si le terminal est occupé.

Lors de l'étape E118, on vérifie si le chargement ainsi lancé est correctement effectué, c'est-à-dire complètement et correctement terminé. Le stockage consiste généralement à remplacer l'information précédente par l'information courante, l'information précédente étant écrasée par l'information courante ainsi chargée.

En cas de chargement incorrect ou incomplet, on tente à nouveau un chargement.

Dans le cas d'un chargement correctement et complètement réalisé, la nouvelle image interactive est validée, (remplacement de l'ancienne image par la nouvelle image) et le procédé retourne à l'étape E102 pour programmer l'alarme horaire théorique pour la prochaine activation selon la périodicité choisie.

En cas d'interruption au cours du chargement (étape E122), on passe à une programmation ultérieure (E116).

En référence à la **figure 8,** le dispositif récepteur/décodeur 300 comprend un dispositif (ou module) de chargement 400 apte à mettre en oeuvre le procédé décrit en référence à la **figure 7**.

Le dispositif de chargement 400 est de la forme "application" et comprend un module formant gestionnaire de ressources 404, un module formant gestionnaire d'alarme 406, un module formant gestionnaire des informations interactives (images de l'interactivité) 402 et un module d'exécution de chargement 408.

De tels modules participent au procédé de chargement conformément aux **figures 9 à 13.**

En bref, le module de gestion des ressources 404 vérifie la disponibilité des ressources (le dispositif récepteur/décodeur est-il en cours d'utilisation ?, au moins une chaîne de réception est-elle non occupée, le dispositif récepteur/décodeur est-il en veille ?, l'utilisateur est il en train d'utiliser son dispositif récepteur/décodeur ?, etc). Le module de gestion des ressources gère la mise à disposition des ressources en cas de mise à jour forcée (information périmée).

Le module de gestion des alarmes 406 programme les alarmes (théorique et ultérieure) effectue les réveils du terminal et notifie les applications.

Le module de gestion des informations interactives 402 joue le rôle d'un chef d'orchestre. Il effectue la vérification des paramètres de chargement et demande la re-programmation si nécessaire en sollicitant le module gestionnaire d'alarmes. Le module de gestion des informations interactives 402 est piloté par le diffuseur.

Le module d'exécution du chargement 408 réalise l'acquisition sur ordre du module de gestion des informations interactives 402 et remplace l'ancienne information par la nouvelle information ainsi chargée.

En référence à la **figure 9,** le diffuseur (source de diffusion) fournit dans les données de signalisation 12 la date théorique (heures) permettant de programmer l'alarme horaire théorique en vue d'activer automatiquement le module de chargement à un moment défini à l'avance (étape E200).

Le gestionnaire des informations interactives 402 récupère les données de signalisation 12 et fournit au gestionnaire de l'alarme 406 les heures théoriques d'activation (étape E202).

Le gestionnaire d'alarme 406 stocke les heures théoriques d'activation.

La récupération s'effectue via les équipements matériel et logiciel du dispositif récepteur/décodeur 310, 312, 314, 316, 318, 320.

Le gestionnaire d'alarme 406 contient un espace de stockage propre à stocker les heures théoriques de chargement.

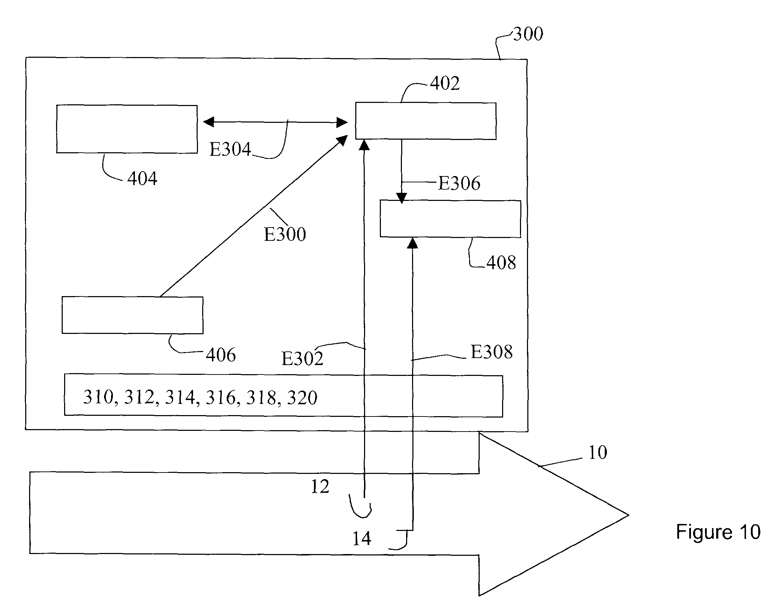

En référence à la **figure 10**, lorsque l'horloge du gestionnaire d'alarme 406 constate que l'heure courante correspond à l'heure théorique d'activation, préalablement récupérée et stockée conformément à la **figure 9**, le gestionnaire d'alarme 406 sollicite le gestionnaire des informations interactives 402 (étape E300).

Cette sollicitation provoque le réveil du dispositif récepteur/décodeur si celui-ci est en veille.

Le gestionnaire des informations interactives 402 procède ensuite aux tests relatifs aux paramètres de chargement à vérifier (étape E302).

En premier lieu, il vérifie dans les données de signalisation 12 l'opportunité d'effectuer le chargement.

Ce test correspond par exemple à une comparaison des identifiants des images de l'interactivité stockée et diffusée.

Le gestionnaire des informations interactives 402 vérifie également auprès du gestionnaire des ressources 404 si les ressources du dispositif récepteur/décodeur sont disponibles pour le chargement (étape E304).

Si le résultat des vérifications le permet, le gestionnaire des informations interactives 402 demande (étape E306) au module d'exécution de chargement 408 d'opérer le chargement des données de l'image de l'interactivité disponible dans le flux 14 (étape E308).

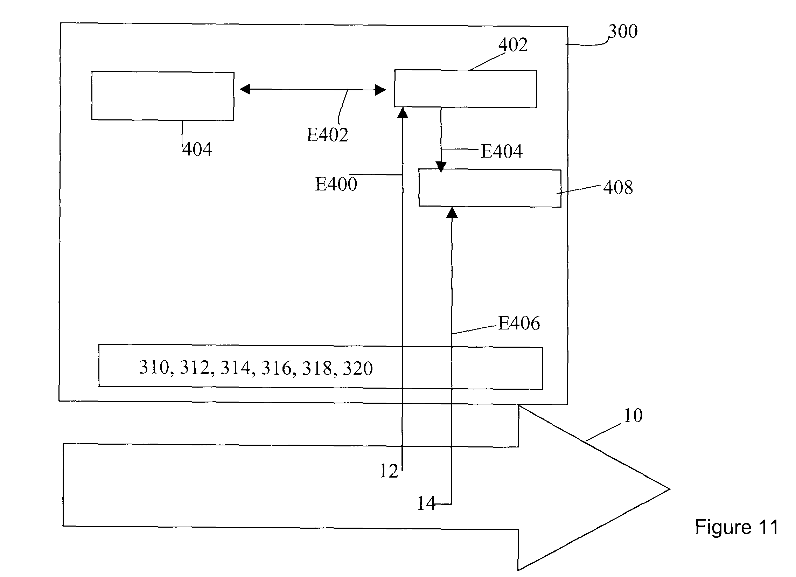

En référence à la **figure 11,** le chargement de l'image de l'interactivité peut se produire de façon autoritaire et obligatoire lorsque la comparaison entre les identifiants des images de l'interactivité diffusée (courante) et stockée (précédente) est égale ou correspond au dépassement d'un seuil critique choisi.

Par exemple, le gestionnaire des informations interactives 402 constate que l'identifiant de l'image de l'interactivité stockée est strictement inférieur à un seuil critique défini dans les données de signalisation (étape 400), ou inférieur ou égal audit seuil critique.

Dans ce cas, le gestionnaire des informations interactives 402 alloue autoritairement toutes les ressources nécessaires au chargement de l'image de l'interactivité.

Cette allocation autoritaire consiste à solliciter le gestionnaire des ressources 404 (étape E402), qui, en réponse, libère les ressources (chaîne de réception) pour réaliser le chargement.

Lorsque l'allocation des ressources est réalisée de la part du gestionnaire de ressources 404 au profit du gestionnaire des informations interactives 402, le gestionnaire des informations interactives 402 délivre un ordre de chargement destiné à être adressé au module d'exécution de chargement 408 (étape E404).

En réponse, le module d'exécution de chargement 408 opère le chargement des données de l'image de l'interactivité disponibles dans le flux 14 (étape E406) dans une mémoire appropriée 310 du terminal.

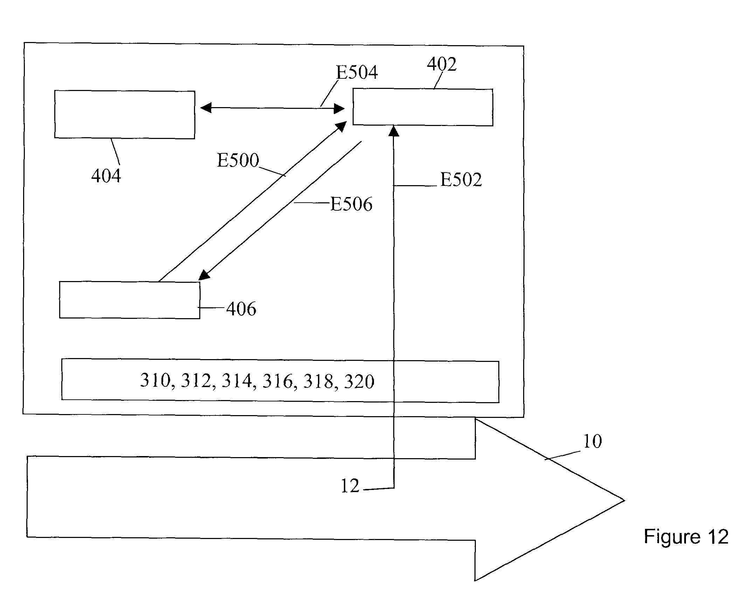

En référence à la **figure 12,** en cas d'échec de chargement à la suite d'une vérification négative à l'égard d'un paramètre de chargement (par exemple indisponibilité des ressources du dispositif récepteur/décodeur, c'est-à-dire terminal occupé), le gestionnaire de l'image de l'interactivité 402 est apte à programmer une nouvelle alarme pour mettre en place ultérieurement une nouvelle activation du module de chargement.

Par exemple, en cas d'échec lors du chargement (étape E506), le gestionnaire d'informations interactives 402 programme l'alarme horaire ultérieure pour tenter un nouveau chargement, qui lui, s'il échoue, reprogrammera à son tour une nouvelle alarme horaire ultérieure jusqu'au chargement de l'information 14.

Les étapes E500 à E504 sont similaires aux étapes E300 à E304 décrites en référence à la **figure 10.**

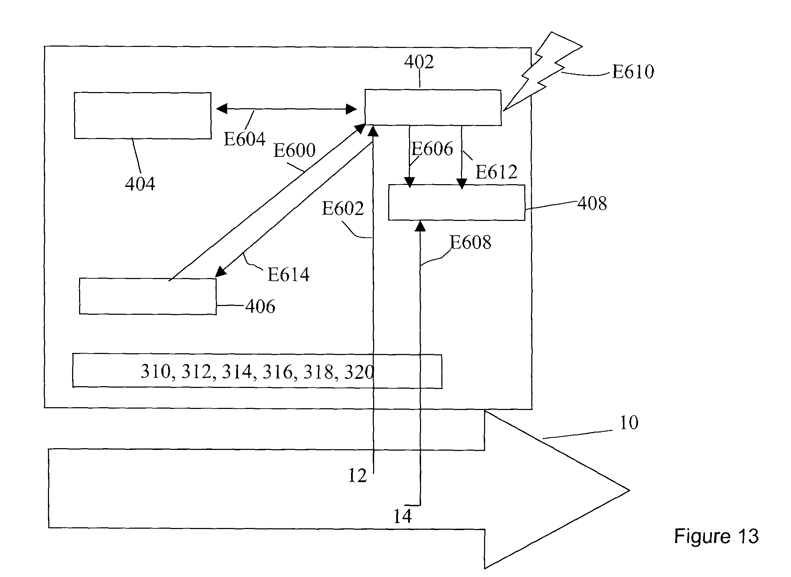

En référence à la **figure 13,** en présence d'un événement incompatible avec le chargement, par exemple une interruption par l'utilisateur, ou une indisponibilité soudaine d'une ressource du dispositif récepteur/décodeur, ou encore une interdiction de chargement dans les données de signalisation (étape E610), il est prévu que le gestionnaire de l'image de l'interactivité 402 demande l'interruption de chargement au module d'exécution de chargement 408 (étape E612).

En réponse à cet ordre d'interruption, le module d'exécution du chargement 408 arrête le chargement en cours.

Le gestionnaire de l'image de l'interactivité 402 reprogramme une nouvelle alarme pour une nouvelle tentative de chargement (étape E614).

Les étapes E600 à E608 sont similaires aux étapes E300 à E308 décrites en référence à la figure 10.

Si un événement parvient à interrompre ou à empêcher le chargement de l'image de l'interactivité sur un identifiant critique, par exemple lors d'une coupure d'alimentation du dispositif récepteur/décodeur (une indisponibilité soudaine d'une ressource), alors le dispositif récepteur/décodeur se retrouve dans un état dit "dégradé" dans lequel les données de l'image de l'interactivité sont réputées indisponibles.

Dans ce cas, il est prévu de mettre en place une nouvelle tentative de chargement qui sera mise en place dès que l'état du dispositif récepteur/décodeur le permettra.

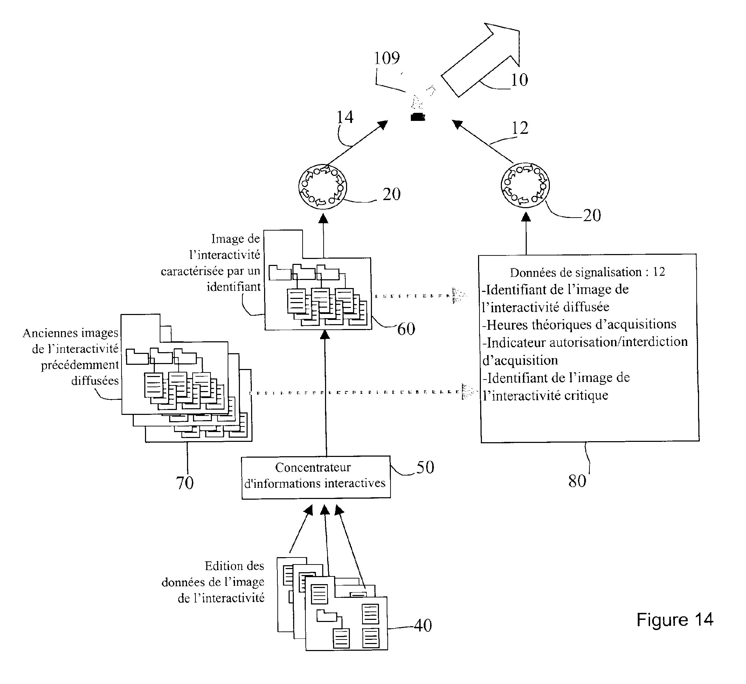

En référence à la **figure 14**, le chargement de l'image de l'interactivité engendre des modifications au niveau de la source de diffusion 101.

Ainsi, le diffuseur construit l'image de l'interactivité 14 en concaténant l'ensemble des informations et la diffuse.

Par exemple, un concentrateur d'informations interactives 50 concatène l'ensemble des données de l'image de l'interactivité 40.

Le diffuseur caractérise la version de l'image de l'interactivité 14 en cours de diffusion 60 par un identifiant diffusé dans les données de signalisation 12.

Pour forcer le chargement des dispositifs récepteur/décodeur restés sur une image d'une interactivité trop ancienne, un identifiant critique est émis par le diffuseur, caractérisant l'image périmée la plus récente 70. Cet identifiant critique 70 est inséré dans les données de signalisation 80 (12).

Il en résulte que tous les dispositifs récepteur/décodeur disposant d'une image de l'interactivité antérieure ou égale à l'image dite critique opéreront un chargement sur le mode obligatoire.

Lors de la phase de remplacement de l'information diffusée (image de l'interactivité), le diffuseur change l'indicateur d'autorisation de chargement en interdiction afin d'empêcher les terminaux d'activer un chargement qui débuterait sur une version pour se terminer sur une autre version et donc éviter d'avoir une image incohérente.

Ainsi, les données de signalisation comprennent un identifiant de l'image de l'interactivité diffusée, les heures théoriques de chargement, un indicateur interdiction/autorisation de chargement, un identifiant de l'image de l'interactivité critique, une date et/ou un délai concernant l'alarme horaire ultérieure, et la périodicité pour la prochaine activation.

Le procédé de chargement peut être mis en oeuvre pour toute information, par exemple, un guide des programmes.

Un guide des programmes est un ensemble d'informations décrivant l'ensemble des programmes accessibles sur une période donnée et sur un ensemble de canaux disponibles.

Chez le diffuseur, cet ensemble de programmes est présent sous la forme d'une base de données décrivant l'ensemble des programmes accessibles sur les canaux disponibles.

A partir de cet ensemble de programmes, il est créée une information ou image de l'interactivité concernant le guide des programmes.

Une image de l'interactivité contient l'ensemble des programmes à partir d'un jour choisi pour une période déterminée, généralement de l'ordre de huit jours. Chaque jour, le diffuseur diffuse des informations sur les programmes pour le jour en cours et les sept jours suivants, donc la version ayant l'identifiant "0314" (du 07/03 au 14/03 inclus) est construite et diffusée le 07/03. En pratique, les informations sur les programmes doivent être à jour pour au moins le jour en cours et le suivant. Il faut donc, le 07/03, que les informations sur les programmes courent jusqu'au 08/03. Il en résulte que la version critique est la version ayant l'identifiant "0308".

Les flux MPEG 10 (comprenant les données de signalisation 12 et l'image de l'interactivité 14) sont ensuite créés à partir de cette image de l'interactivité 14.

Les données de signalisation 12 associées sont également construites.

En pratique, les données de signalisation comprennent :
- l'identifiant de l'image de l'interactivité courante : ici 0314 ;
- l'identifiant de l'image de l'interactivité critique : ici 0308 ;
- l'heure théorique de l'activation du module de chargement : par exemple 4 heures du matin ;
- la périodicité de chaque activation : 24 heures, donc toutes les nuits à 4 heures du matin ;
- le délai en cas de chargement non réalisé : 2 heures.

En variante, l'activation du module de chargement peut être organisée (programmée) selon d'autres critères.

Par exemple, il peut être prévu une heure d'activation pour une période différente (6 heures) ou bien une suite d'heures, par exemple 4h, 10h, 16 h, 22 h et à nouveau 4 h.

Selon l'exemple, l'identifiant de l'image de l'interactivité critique est émis dans le flux de signalisation 12.

Cet identifiant peut également être déduit dans le dispositif récepteur/décodeur par rapport à la date du jour.

Afin de changer la version de l'image diffusée cycliquement, un indicateur d'autorisation, diffusé dans les données de signalisation, passe du vert au rouge, afin d'interdire toute mise à jour des dispositifs récepteurs/décodeurs lors du changement de version de l'image de l'interactivité.

Le flux MPEG 10 contenant l'image de l'interactivité 14 est inséré dans un mécanisme cyclique permettant d'en assurer la diffusion cyclique, comme décrit en référence à la **figure 14.**

L'image de l'interactivité courante 14 est destinée à remplacer la version précédemment stockée dans le terminal.

Les données de signalisation 12 sont émises de manière cyclique et en parallèle au flux de données diffusé transportant l'image de l'interactivité.

Après l'introduction par le diffuseur de la nouvelle image de l'interactivité sur le mécanisme d'émission cyclique, et après s'être assuré du bon fonctionnement, l'indicateur d'autorisation est remis au vert, autorisant ainsi les dispositifs récepteurs/décodeurs à se mettre à jour.

Les informations (image de l'interactivité) sont diffusées de manière cyclique en continu 24 heures sur 24 heures.

Le dispositif récepteur/décodeur contient une image de l'interactivité ayant un identifiant, par exemple ici l'identifiant "0313" ainsi qu'une programmation par l'intermédiaire d'une alarme d'activation du module de chargement de l'image de l'interactivité, par exemple, à 4 heures du matin.

Une alarme étant programmée, à l'heure théorique d'activation, le gestionnaire d'alarme 406 réveille le dispositif récepteur/décodeur si celui-ci est en veille et notifie le gestionnaire des informations interactives 402.

Le gestionnaire des informations interactives 402 effectue alors l'ensemble des contrôles suivants :
1) un premier contrôle consiste à répondre à la question "le numéro d'identifiant de l'image de l'interactivité contenu dans le dispositif récepteur/décodeur est-il différent de l'identifiant courant ?".
   Dans la négative, le gestionnaire de l'image de l'interactivité 402 programme une alarme sur la prochaine heure théorique d'activation.
   Dans le cas d'une réponse positive, le procédé passe à l'étape suivante ;
2) le deuxième contrôle consiste à répondre à la question "l'indicateur d'autorisation de chargement est-il vert ?".
   Dans la négative, le chargement ne peut être réalisé, le gestionnaire des informations interactives demande alors de programmer l'alarme horaire ultérieure en fonction de la date d'échec et du délai en cas de chargement non réalisé.
   Dans le cas d'une réponse positive, le procédé passe à l'étape suivante ;
3) le troisième contrôle consiste à répondre à la question "le numéro d'identifiant de l'image de l'interactivité contenu dans le dispositif récepteur/décodeur est-il différent de l'identifiant de l'image de l'interactivité critique ?" (dans l'exemple mentionné ci-avant, l'identifiant présent dans le décodeur est supérieur à l'identifiant critique).
   Dans le cas d'une réponse négative, le chargement de la nouvelle image de l'interactivité est forcé, et le cas échéant les ressources du dispositif récepteur/décodeur sont libérées afin de réaliser le chargement.
4) le quatrième contrôle consiste à répondre à la question "les ressources du dispositif récepteur/décodeur sont-elles disponibles?".
   Lors de ce quatrième test, il est prévu de vérifier plusieurs conditions.

Par exemple, il est prévu de vérifier que la chaîne de réception sur laquelle doit avoir lieu le chargement est libre ou bien de déterminer si une autre chaîne de réception est libre.

Ensuite, il est prévu de vérifier la disponibilité du dispositif récepteur/décodeur.

En effet, si le dispositif récepteur/décodeur reste dans l'état actif (en visualisation), car jamais mis en veille, alors il faut détecter si l'utilisateur est en cours ou non d'utilisation du dispositif récepteur/décodeur.

Cette détection peut être basée, par exemple, sur le nombre d'heures durant lesquelles aucune action de l'utilisateur n'a été faite.

Si les ressources du dispositif récepteur/décodeur ne sont pas disponibles, le gestionnaire des informations interactives demande alors de programmer une alarme horaire ultérieure en fonction de la date d'échec et du délai en cas de chargement non réalisé.

Par contre, lorsque les ressources du dispositif récepteur/décodeur sont disponibles, le procédé de chargement peut démarrer.

Si l'ensemble des paramètres de chargement à vérifier sont à l'état vrai, le chargement de l'image de l'interactivité, ici numéro 0314, est réalisé dans une mémoire temporaire.

Après avoir chargé la nouvelle image, celle-ci est validée et remplace l'image précédente, ici celle ayant l'identifiant 0313.

Après la réalisation du chargement, le gestionnaire des informations interactives demande de programmer la prochaine activation définie par les paramètres "l'heure de chargement (activation)" et "la période de chargement (activation)".

Lorsque le dispositif récepteur/décodeur contient une image de l'interactivité trop ancienne, par exemple ayant comme identifiant la valeur 0306, le comportement du mécanisme de chargement se trouve modifié par rapport à celui décrit ci-avant.

En effet, la version présente dans le dispositif récepteur/décodeur est antérieure ou inférieure à la version dite critique.

La mise à jour de l'image de l'interactivité s'effectue alors en vérifiant plusieurs conditions clefs :

La première condition clef, correspondant à la question "le numéro d'identifiant de l'image de l'interactivité contenu dans le dispositif récepteur/décodeur est-il différent de l'identifiant courant ?", est vérifiée.

La réponse est dans notre exemple positive puisque la version dans le dispositif récepteur/décodeur est ici égale à 0306 et la version courante est égale à 0314 avec une version critique égale 0308.

La seconde condition clef, correspondant à la question "l'indicateur d'autorisation de chargement est-il vert ?", est ensuite vérifiée.

Dans la négative, le chargement ne peut être réalisé, le gestionnaire des informations interactives demande de reprogrammer une alarme horaire ultérieure en fonction de la date d'échec et du délai en cas de chargement non réalisé.

Dans l'affirmative (indicateur d'autorisation de chargement vert), c'est-à-dire données de signalisation 12 comprenant un indicateur d'autorisation de chargement, le procédé de chargement passe à l'étape suivante dans laquelle il est prévu de tester selon la question "le numéro d'identifiant de l'image de l'interactivité contenu dans le dispositif récepteur/décodeur est-il plus ancien que l'identifiant de l'image de l'interactivité critique ?".

Dans le cas de notre exemple, l'identifiant "0306" est antérieur à l'identifiant de l'image de l'interactivité critique (0308).

Ainsi, le chargement de la nouvelle image de l'interactivité doit être forcé, et les ressources du dispositif récepteur/décodeur doivent être libérées afin de réaliser le chargement.

Les ressources du dispositif récepteur/décodeur étant rendues disponibles, aucun test supplémentaire n'est effectué.

L'étape suivante consiste à réaliser le chargement de l'image de l'interactivité n°0314 dans une mémoire temporaire.

Après le chargement de la nouvelle image, celle-ci est validée et remplace l'image précédente ayant l'identifiant 0306.

Après le chargement, le gestionnaire des informations interactives demande de programmer la prochaine activation définie par les paramètres "l'heure d'acquisition" et "la période d'acquisition".

Ainsi, le contrôle et la réactivité du diffuseur sont assurés par la programmation des heures théoriques d'activation, la notion de version critique et l'indicateur d'autorisation de chargement. Le taux de mise à jour est assuré par la reprogrammation automatique sur cycle court en cas d'échec ou de conditions non remplies. La disponibilité du terminal pour l'utilisateur est assurée par l'utilisation d'un paramètre de chargement à vérifier indiquant que l'utilisateur n'utilise pas le terminal au moment de l'activation programmée.

## Revendications

1. Procédé de chargement d'une information (14) dans un système de communication (106) dans lequel une information (14) est diffusée depuis une source de diffusion (101) en vue d'être acquise et stockée dans au moins un terminal (111), le procédé de chargement étant mis en oeuvre au sein du terminal, **caractérisé en ce que** le procédé comprend les étapes suivantes :
- programmation de l'activation automatique d'un module de chargement (400), ladite programmation de l'activation étant prévue pour désynchroniser la phase d'acquisition de l'information de la phase d'utilisation de cette information,
- en réponse à l'activation automatique du module de chargement ainsi programmée (400), vérification d'un ou plusieurs paramètres de chargement prédéterminés, et
- en cas de vérification positive pour chacun des paramètres de chargement, acquisition de l'information courante diffusée depuis la source de diffusion et stockage dans le terminal.

2. Procédé selon la revendication 1, **caractérisé en ce que** la programmation de l'activation est pilotée à distance par la source de diffusion (101) ou établie au préalable avant l'installation du terminal (111).

3. Procédé selon la revendication 1 ou la revendication 2, **caractérisé en ce que** la programmation de l'activation comprend la définition d'un événement déclencheur à la suite duquel le terminal opère automatiquement l'activation du module de chargement.

4. Procédé selon la revendication 3, **caractérisé en ce que** l'événement est du type contextuel.

5. Procédé selon la revendication 3, **caractérisé en ce que** l'événement est du type alarme horaire, définissant le moment où le terminal opère automatiquement l'activation du module de chargement.

6. Procédé selon la revendication 5, **caractérisé en ce que** l'alarme horaire comprend au moins une date théorique d'activation.

7. Procédé selon la revendication 6, **caractérisé en ce que** la date théorique d'activation est fonction d'au moins une donnée contenue dans le flux de données (12) diffusé depuis la source de diffusion.

8. Procédé selon l'une des revendications 5 à 7, **caractérisé en ce que** la programmation de l'activation comprend en outre la définition d'une alarme horaire ultérieure en cas d'échec de chargement et/ou d'interruption du chargement et/ou en cas de vérification négative d'au moins un paramètre de chargement.

9. Procédé selon la revendication 8, **caractérisé en ce que** l'alarme horaire ultérieure comprend au moins une date ultérieure définie en fonction de la date d'échec de chargement et un délai prédéterminé.

10. Procédé selon la revendication 9, **caractérisé en ce que** l'alarme horaire ultérieure est répétée jusqu'au chargement de l'information.

11. Procédé selon la revendication 10, **caractérisé en ce que** le délai de l'alarme horaire ultérieure est fonction d'au moins une donnée contenue dans le flux de données (12) diffusé depuis la source de diffusion.

12. Procédé selon l'une des revendications 1 à 11, **caractérisé en ce que** l'étape d'acquisition et de stockage de l'information comprend en outre la programmation de la prochaine activation, après acquisition de l'information courante, en fonction d'une périodicité choisie.

13. Procédé selon la revendication 12, **caractérisé en ce que** la périodicité de la prochaine activation est fonction d'au moins une données contenue dans le flux de données (12).

14. Procédé selon l'une des revendications 1 à 13, **caractérisé en ce que** l'un des paramètres de chargement à vérifier est relatif à une autorisation de chargement.

15. Procédé selon la revendication 14, **caractérisé en ce que** l'autorisation de chargement se vérifie en fonction d'un indicateur diffusé dans le flux de données, la vérification étant positive lorsque l'indicateur correspond à une autorisation de chargement de l'information courante diffusée depuis la source de diffusion.

16. Procédé selon l'une des revendications 1 à 15, **caractérisé en ce que** l'un des paramètres de chargement à vérifier est relatif à la comparaison entre l'information courante diffusée depuis la source de diffusion et l'information précédemment acquise et stockée, la vérification étant positive notamment lorsque l'identifiant de l'information contenue dans le terminal récepteur est différent de l'identifiant de l'information courante diffusée.

17. Procédé selon l'une des revendications 1 à 16, **caractérisé en ce que** l'un des paramètres de chargement à vérifier est relatif à la comparaison entre l'information contenue dans le terminal et un seuil critique correspondant à une information périmée, la vérification étant positive notamment lorsque l'identifiant de l'information contenue dans le terminal est strictement inférieur au seuil critique, ou inférieur ou égal au seuil critique.

18. Procédé selon la revendication 17, **caractérisé en ce que** le seuil critique est contenu dans le flux de données (12) diffusé depuis la source de diffusion.

19. Procédé selon l'une des revendications 1 à 18, **caractérisé en ce que** l'un des paramètres de chargement à vérifier est relatif aux ressources de traitement et/ou de mémorisation du terminal, la vérification étant positive lorsque les ressources de traitement et/ou de mémorisation du terminal sont disponibles pour le chargement.

20. Procédé de diffusion d'une information dans un système de communication (106) dans lequel une information (14) est diffusée depuis une source de diffusion (101) à destination d'au moins un terminal (111) pour acquisition, ledit procédé de diffusion étant mis en oeuvre au sein de la source de diffusion (101), **caractérisé en ce que** le procédé de diffusion comprend les étapes suivantes :
- diffuser cycliquement l'information à acquérir (14) selon un premier flux de données, et
- diffuser cycliquement des données de signalisation (12) selon un second flux de données, parallèle au premier flux de données, les données de signalisation (12) comprenant des données destinées à programmer l'activation automatique du terminal pour désynchroniser la phase d'acquisition de l'information dans le terminal de la phase d'utilisation dans ledit terminal.

21. Procédé de diffusion selon la revendication 20, **caractérisé en ce que** les données de signalisation (12) ainsi diffusées comprennent un identifiant courant pour l'information courante diffusée depuis la source de diffusion.

22. Procédé de diffusion selon la revendication 20 ou la revendication 21, **caractérisé en ce que** les données de signalisation ainsi diffusées (12) comprennent un indicateur correspondant à l'autorisation du chargement.

23. Procédé selon l'une des revendications 20 à 22, **caractérisé en ce que** les données de signalisation (12) comprennent un indicateur correspondant à un seuil critique.

24. Procédé selon l'une des revendications 20 à 23, **caractérisé en ce que** les données de signalisation comprennent au moins une date théorique d'activation.

25. Procédé selon l'une des revendications 20 à 24, **caractérisé en ce que** les données de signalisation ainsi diffusées (12) comprennent une périodicité relative à la prochaine activation, après acquisition.

26. Procédé selon l'une quelconque des revendications 1 à 25, **caractérisé en ce que** le système de communication (106) est de type télévision numérique et **en ce que** le terminal (111) comprend un dispositif récepteur/décodeur (300).

27. Dispositif de chargement d'une information (14) dans un système de communication (106) dans lequel une information (14) est diffusée depuis une source de diffusion (101) en vue d'être acquise et stockée dans au moins un terminal (111), **caractérisé en ce que** le dispositif de chargement comprend :
- un module de chargement (400) apte à fonctionner automatiquement en fonction d'un programme d'activation choisi pour désynchroniser la phase d'acquisition de l'information de la phase d'utilisation de cette information, et
- des moyens de traitement (402, 404, 406, 408) aptes, en réponse à l'activation du module de chargement ainsi programmée, à vérifier un ou plusieurs paramètres de chargement prédéterminé, et en cas de vérification positive pour chacun des paramètres de chargement, à acquérir l'information courante diffusée depuis la source de diffusion et à la stocker dans le terminal.

28. Dispositif de chargement selon la revendication 27, **caractérisé en ce que** le module de chargement (400) est apte à exécuter un programme d'activation comprenant un événement déclencheur à la suite duquel le terminal opère automatiquement l'activation du module de chargement.

29. Dispositif de chargement selon la revendication 28, **caractérisé en ce que** l'événement est du type contextuel.

30. Dispositif de chargement selon la revendication 28, **caractérisé en ce que** l'événement est du type alarme horaire, définissant le moment où le terminal opère automatiquement l'activation du module de chargement.

31. Dispositif de chargement selon la revendication 30, **caractérisé en ce que** l'alarme horaire comprend au moins une date théorique d'activation.

32. Dispositif de chargement selon la revendication 31, **caractérisé en ce que** la date théorique d'activation est fonction d'au moins une donnée contenue dans le flux de données diffusé depuis la source de diffusion.

33. Dispositif de chargement selon l'une des revendications 30 à 32, **caractérisé en ce que** la programmation de l'activation comprend en outre la définition d'une alarme horaire ultérieure en cas d'échec de chargement et/ou d'interruption du chargement et/ou en cas de vérification négative d'au moins un paramètre de chargement.

34. Dispositif de chargement selon la revendication 33, **caractérisé en ce que** l'alarme horaire ultérieure comprend une date ultérieure définie en fonction de la date d'échec de chargement et d'un délai prédéterminé.

35. Dispositif de chargement selon la revendication 34, **caractérisé en ce que** l'alarme horaire ultérieure est répétée jusqu'au chargement de l'information.

36. Dispositif de chargement selon la revendication 35, **caractérisé en ce que** le délai de l'alarme horaire ultérieure est fonction d'une donnée contenue dans le flux de données (12) diffusé depuis la source de diffusion.

37. Dispositif de chargement selon l'une des revendications 27 à 36, **caractérisé en ce que** les moyens de traitement sont aptes à exécuter en outre la programmation de la prochaine activation, après acquisition de l'information courante, en fonction d'une périodicité choisie.

38. Dispositif de chargement selon la revendication 37, **caractérisé en ce que** la périodicité de la prochaine activation est fonction d'au moins une donnée contenue dans le flux de données (12) diffusé depuis la source de diffusion.

39. Dispositif selon l'une des revendications 27 à 38, **caractérisé en ce que** les moyens de traitement (402, 404, 406, 408) du dispositif de chargement sont agencés pour vérifier au moins un paramètre de chargement relatif à une autorisation de chargement.

40. Dispositif de chargement selon la revendication 39, **caractérisé en ce que** l'autorisation de chargement se vérifie en fonction d'un indicateur diffusé dans le flux de données (12), la vérification étant positive lorsque l'indicateur correspond à une autorisation de chargement de l'information courante diffusée depuis la source de diffusion.

41. Dispositif de chargement selon l'une des revendications 27 à 40, **caractérisé en ce que** les moyens de traitement (402, 404, 406, 408) sont agencés pour vérifier un paramètre de chargement relatif à la comparaison entre l'information courante diffusée depuis la source de diffusion et l'information précédemment acquise et stockée, la vérification étant positive notamment lorsque l'identifiant de l'information contenue dans le terminal récepteur est différent de l'identifiant de l'information courante diffusée.

42. Dispositif de chargement selon l'une des revendications 27 à 41, **caractérisé en ce que** les moyens de traitement (402, 404, 406, 408) sont agencés pour vérifier un paramètre de chargement relatif à la comparaison entre l'information contenue dans le terminal et un seuil critique correspondant à une information périmée, la vérification étant positive notamment lorsque l'identifiant de l'information contenue dans le terminal est strictement inférieur au seuil critique, ou inférieur ou égal au seuil critique.

43. Dispositif selon la revendication 42, **caractérisé en ce que** le seuil critique est contenu dans le flux de données diffusé depuis la source de diffusion.

44. Dispositif selon l'une des revendications 27 à 43, **caractérisé en ce que** les moyens de traitement (402, 404, 406, 408) sont agencés pour vérifier un paramètre de chargement relatif aux ressources de traitement et/ou de mémorisation du terminal, la vérification étant positive lorsque les ressources de traitement et/ou de mémorisation du terminal sont disponibles pour le chargement.

45. Dispositif de diffusion d'une information dans un système de communication (106) dans lequel une information (14) est diffusée depuis une source de diffusion (101) à destination d'au moins un terminal (111) pour acquisition, ledit dispositif de diffusion étant mis en oeuvre au sein de la source de diffusion (101), **caractérisé en ce que** ledit dispositif de diffusion comprend :
- des moyens pour diffuser cycliquement l'information à acquérir (14) selon un premier flux de données, et
- des moyens pour diffuser cycliquement des données de signalisations (12) selon un second flux de données, parallèle au premier flux de données, les données de signalisation (12) comprenant des données destinées à programmer l'activation automatique du terminal pour désynchroniser la phase d'acquisition de l'information dans le terminal de la phase d'utilisation dans ledit terminal.

46. Dispositif de diffusion selon la revendication 45, **caractérisé en ce qu'**il comprend des moyens pour insérer dans les données de signalisation (12) un identifiant courant pour l'information courante diffusée depuis la source de diffusion.

47. Dispositif de diffusion selon la revendication 45 ou la revendication 46, **caractérisé en ce qu'**il comprend des moyens pour insérer dans les données de signalisation (12) un indicateur correspondant à l'autorisation du chargement.

48. Dispositif de diffusion selon l'une des revendications 45 à 47, **caractérisé en ce qu'**il comprend des moyens pour insérer dans les données de signalisation (12) un indicateur correspondant à un seuil critique.

49. Procédé selon l'une des revendications 45 à 48, **caractérisé en ce qu'**il comprend des moyens pour insérer dans les données de signalisation une date théorique d'activation.

50. Procédé selon l'une des revendications 45 à 49, **caractérisé en ce qu'**il comprend des moyens pour insérer dans les données de signalisation (12) une périodicité pour la prochaine activation, après acquisition.

51. Procédé selon l'une des revendications 45 à 50, **caractérisé en ce qu'**il comprend des moyens pour insérer dans les données de signalisation (12) une date et/ou un délai pour déterminer une alarme horaire ultérieure en cas d'échec de chargement et/ou d'interruption du chargement et/ou en cas de vérification négative d'au moins un paramètre de chargement.
